# EUROPEAN PATENT APPLICATION

(11) **EP 4 319 050 A1**
(43) Date of publication of application: **07.02.2024**
(21) Application number: 23189178.9
(22) Date of filing: 02.08.2023
(51) Int. Cl.: H04L 9/40, H04L 61/4511

(54) **INTERCEPT FOR ENCRYPTED COMMUNICATIONS**

(30) Priority: 03.08.2022 US 202263394900 P; 29.11.2022 US 202218071435
(71) Applicant: CA, Inc., San Jose, CA 95131 (US)
(72) Inventor: Du Toit, Roelof Nico, Portersville, 16051 (US); Tomic, Gary, Petersburg, N0B 2H0 (CA); Frederick, Ronald Andrew, Mountain View, 94040 (US)
(74) Representative: Bosch Jehle Patentanwaltsgesellschaft mbH

(57) **Abstract**

Aspects of the disclosure include replacing, by a DNS proxy in DNS responses, a cryptographic key associated with a client-facing server for an origin content server with another cryptographic key received from a TLS proxy. A device may encrypt an extension of a ClientHello message with the other cryptographic key, such that the encrypted ClientHello (ECH) extension can be decrypted by the TLS proxy. The TLS proxy can then allow or deny the connection using a TLS intercept policy and decrypted information in the ClientHello message, and if the TLS connection is allowed, re-encrypt the ECH with the cryptographic key in the DNS response for the client-facing server to decrypt for establishment of the TLS connection with the origin content server. To preserve selective intercept while using ECH, a TLS Intercept Policy may be used to decide whether the TLS proxy feeds an Application Layer Proxy.

## Description

This application claims the benefit of priority to U.S. Provisional Patent Application No. 63/394,900, entitled, "Mechanism to Selectively Intercept TLS Sessions that Use the TLS Encrypted ClientHello (ECH) Extension", filed on August 3, 2022, the disclosure of which is hereby incorporated herein in its entirety.

The subject technology relates generally to network communications including, for example, communications using the Transport Layer Security (TLS) protocols.

Transport layer security (TLS) connections are established using a ClientHello message from client device to a server during a TLS handshake. Encrypted ClientHello (ECH) is used to protect, via encryption, sensitive fields, such as a server name indication (SNI), in the transport layer security (TLS) handshake ClientHello message. Protecting the SNI field in this way is at odds with network security products that rely on access to the SNI for categorization and policy enforcement. When ECH is used, TLS proxies are no longer able to enforce selective intercept policies that are based on knowledge of the origin content server hostname.

According to an aspect, a non-transitory computer-readable medium storing instructions is provided which, when executed by one or more processors, cause the one or more processors to perform operations comprising:
providing, by a device, a request for an address corresponding to a name of a first server to a second server;
receiving a response to the request from the second server, the response including: an address of a third server different from the first server and through which one or more devices communicate with the first server, and a first cryptographic key that is different from a second cryptographic key for the third server;
encrypting, by the device using the first cryptographic key, the name of the first server to generate an encrypted name of the first server; and
providing a message for establishing a connection between the device and the first server to a fourth server, the message including the encrypted name of the first server.

Advantageously, the second server comprises a DNS proxy, wherein the third server comprises a client-facing server for a set of servers including the first server, and wherein the fourth server comprises a transport layer security (TLS) proxy.

Advantageously, the device, the DNS proxy, and the TLS proxy are associated with a common enterprise.

Advantageously, the TLS proxy is configured to allow or deny the establishing of the connection based, in part, on a decryption of the encrypted name of the first server and a policy of the enterprise.

Advantageously, the message comprises an encrypted ClientHello (ECH) that includes the encrypted name of the first server.

Advantageously, the message further comprises an unencrypted portion.

According to an aspect, a non-transitory computer-readable medium is provided storing instructions which, when executed by one or more processors, cause the one or more processors to perform operations comprising:
receiving, by a first server, a request for a server address from a device;
obtaining, a response to the request, the response including a first cryptographic key;
replacing, by the first server, the first cryptographic key in the response with a second cryptographic key; and
providing the response with the second cryptographic key from the first server to the device.

Advantageously, the first server comprises a DNS proxy.

Advantageously, obtaining the response comprises:
forwarding the request to a second server; and
receiving the response including the first cryptographic key from the second server.

Advantageously, the device and the first server are associated with an enterprise, and wherein the second server is unassociated with the enterprise.

Advantageously, the first cryptographic key comprises a public key of a third server.

Advantageously, the second cryptographic key comprises a public key of a fourth server.

Advantageously, the fourth server is associated with the enterprise and the third server is unassociated with the enterprise.

Advantageously, the third server is a client-facing server for a set of servers that include a fifth server at the server address and having a name that is included in the request.

Advantageously, the operations further comprise:
storing the first cryptographic key at the first server in association with the name.

According to an aspect, a non-transitory computer-readable medium is provided storing instructions which, when executed by one or more processors, cause the one or more processors to perform operations comprising:
receiving, by a first server from a device, a message for establishing a connection between the device and a second server, wherein the message comprises an encrypted portion, encrypted using a cryptographic key associated with cryptographic information stored at the first server;
decrypting, by the first server, the encrypted portion using the cryptographic information associated with the cryptographic key, to obtain information that includes a name of the second server; and
allowing or denying the establishing of the connection between the device and the second server based at least in part on the name of the second server.

Advantageously, the operations further comprise:
re-encrypting, by the first server, the information that includes the name of the second server using another cryptographic key different from the cryptographic key to generate re-encrypted information;
forwarding the message with the re-encrypted information to a third server; and
determining, by the first server and based on an intercept policy, whether to allow a security check in an application layer proxy to be performed.

Advantageously, the first server comprises a transport layer security (TLS) proxy, and wherein the second server comprises a server of an anonymity set of servers having a client-facing server implemented by the third server.

Advantageously, the operations further comprise:
generating the cryptographic key at the first server; and
providing the cryptographic key to a fourth server.

Advantageously, the fourth server comprises a DNS proxy, wherein the device, the TLS proxy, and the DNS proxy are associated with an enterprise, and wherein the anonymity set of servers and the client-facing server are unassociated with the enterprise.

### BRIEF DESCRIPTION OF THE DRAWINGS

Certain features of the subject technology are set forth in the appended claims. However, for purpose of explanation, several embodiments of the subject technology are set forth in the following figures.
FIG. 1 is a diagram illustrating an example network architecture deploying encrypted ClientHello (ECH) according to aspects of the subject technology.
FIG. 2 is a diagram illustrating an example system for an enterprise to inspect the contents of an ECH extension according to aspects of the subject technology.
FIG. 3 is a diagram illustrating an example system for an enterprise having a DNS proxy implemented at a gateway server to inspect the contents of an ECH extension according to aspects of the subject technology.
FIG. 4 illustrates a flowchart of illustrative operations that may be performed by a client device in accordance with aspects of the subject technology.
FIG. 5 illustrates a flowchart of illustrative operations that may be performed by a DNS proxy in accordance with aspects of the subject technology.
FIG. 6 illustrates a flowchart of illustrative operations that may be performed by a TLS proxy in accordance with aspects of the subject technology.
FIG. 7 is a diagram illustrating a change to a model in a TLS intercept policy according to aspects of the subject technology.
FIG. 8 is a block diagram illustrating components of an electronic system with which one or more implementations of the subject technology may be implemented.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring concepts of the subject technology.

A TLS proxy can be implemented at a server or another computing device. In one or more implementations, a TLS proxy may refer to a combination of transport (e.g., TCP/IP) connection intercept with TLS decrypt and TLS re-encrypt, and may also be referred to as TLS intercept. In one or more implementations, a secure web gateway (e.g., implemented at a server or another computing device) may combine TLS proxy functionality with application layer (L7) protocol inspection to enforce enterprise application layer security policies for an enterprise.

In one or more implementations, an enterprise may be an organization such as a business having a computing system that is managed by the organization and which can include telecommunications systems (e.g., large-scale network equipment, telephone systems, Session Initiation Protocol (SIP) devices), servers, server farms and/or other infrastructure for cloud computing, and/or client devices (e.g., workstations, desktop computers, laptop computers, mobile phones, and the like) designed and/or installed specifically for purposes of the enterprise. The equipment, servers, telephone systems, SIP devices, and/or client devices of an enterprise may have enterprise firmware and/or software installed thereon that can be accessed, updated, and/or otherwise managed by the enterprise (e.g., by an authorized administrator for the administration). In one or more implementations, the enterprise firmware and/or software may be arranged to perform one or more of the methods and/or operations described herein.

One approach to a TLS proxy combined with L7 protocol inspection is a (hypertext transfer protocol secure) HTTPS proxy, which can be implemented as a HTTP proxy that uses a TLS proxy, with the ability to enforce policy on both TLS and application levels. TLS proxies may have the ability to selectively intercept, avoiding any visibility into or modification of the original application protocol payload. However, such selective intercept relies on knowledge of the origin content server hostname, which can be extracted in plaintext from the TLS ClientHello SNI (server name) field. In a system in which ECH is used, the SNI is encrypted and can therefore be inaccessible by the TLS proxy.

Aspects of the subject technology facilitate selective intercept of TLS sessions that use ECH, while preserving the use of ECH in upstream TLS sessions (where "upstream" may refer to TLS sessions between the TLS proxy and TLS destination servers). For example, in one or more implementations described in further detail hereinafter, a domain name service (DNS) proxy operates in cooperation with a TLS proxy to allow a client device to encrypt a message (e.g., a handshake message such as a ClientHello) using a cryptographic key that is known to the TLS proxy, and to allow the TLS proxy to decrypt, inspect, and re-encrypt the ClientHello for upstream TLS communication. As defined in the TLS public standard ClientHello message includes a TLS version, indication(s) of one or more cipher suites, a string of random bytes (e.g., a client random), a server name indication, and/or other information.

In one or more implementations, a DNS Proxy may refer to a logical building block in a network security solution that can be deployed in the path between a DNS stub resolver (e.g., an operating system DNS resolver) and a DNS recursive resolver and/or DNS authoritative resolver and that is able to observe and modify DNS requests and DNS responses. A DNS proxy can be implemented at a server or another computing device. In various implementations, the DNS proxy can be deployed separately from the TLS proxy (e.g., for DNS over UDP or TCP (Do53) traffic), or can be integrated with a TLS Proxy (e.g., when intercepting DNS over HTTPS (DoH) traffic).

Preserving the use of ECH upstream may be technically advantageous for a number of reasons. For example, a destination server might not be available without ECH in some use cases. As another example, a destination server might behave differently if ECH is not used (e.g., which can be used by malicious sites, such as malware C2 servers, as a countermeasure). As another example, the security properties of downstream TLS sessions can be preserved by the subject technology when connecting upstream, which can protect sensitive information to preserve the privacy and security of client communications.

The TLS 1.3 specification [RFC8446] (available at https://datatracker.ietf.org/doc/html/rfc8446) and the TLS Encrypted Client Hello Specification (available at https://datatracker.ietf.org/doc/html/draft-ietf-tls-esni) are each hereby incorporated herein by reference in their entireties.

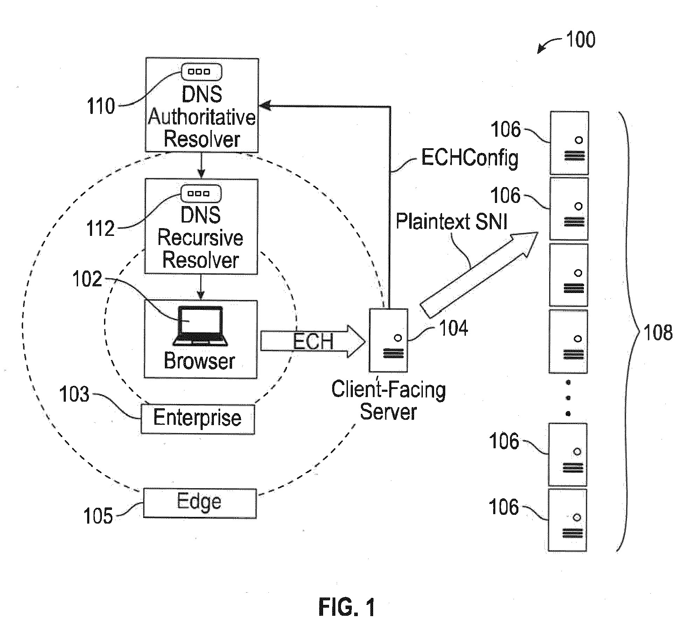

FIG. 1 is a diagram illustrating an example network architecture deploying encrypted ClientHello (ECH). Not all of the depicted components of FIG. 1 may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

In the example network architecture 100 of FIG. 1, a client device 102 establishes, using a TLS handshake including an ECH extension, a TLS connection with an origin content server 106 that is one of an anonymity set 108 of origin content servers 106. As shown, the TLS connection may be established via a client-facing server 104 for the anonymity set 108. The ECH mechanism is deployed in TLS 1.3, and is used to hide sensitive TLS handshake fields, such as the SNI, for privacy and security reasons. A client-facing server may refer to a server through which one or more devices (e.g., client devices) communicate with the servers of an anonymity set. A device communicating with a server through a client-facing server may include the client-facing server forwarding messages from the client device to the server and from the server to the device. A client-facing server may refer to a server that is configured to establish connections to any server of the anonymity set in a way that is indistinguishable from a connection to any other server of the anonymity set. An anonymity set may be set of servers having a closed set of authorized domains. In one or more implementations, establishing a connection between a client device 102 and an origin content server 106 through a client-facing server 104 may include the client-facing server 104 receiving a message including an ECH from the client device 102, the client-facing server 104 decrypting the ECH, the client-facing server 104 forwarding the decrypted ECH to the origin content server 106, and the client-facing server 104 forwarding a message (e.g., a ServerHello) from the origin content server 106 to the client device 102.

For example, using ECH as illustrated in FIG. 1, connections to servers (e.g., original content servers) in the same anonymity set are indistinguishable from one another, and existing security properties of TLS 1.3 are unaffected. In one or more implementations, an anonymity set may be defined as a set of co-located servers with consistent externally visible TLS configurations, including supported versions and cipher suites.

As shown, the client device 102 may receive DNS responses (e.g., to DNS requests) from a DNS recursive resolver 112 (e.g., which may generate the DNS response using cached data at the DNS recursive resolver 112 and/or data obtained from a DNS authoritative resolver 110 and/or other DNS servers). A DNS request may refer to a request for an address (e.g., an internet-protocol (IP) address) corresponding to a name (e.g., a domain name) of a server or a device. The DNS request may also include a request for other information e.g., ECH configuration information) associated with the server corresponding to the name. A DNS response may refer to a response to a DNS request, the response including the address and/or other information included in the DNS request. In use cases in which ECH is used, the DNS response to a DNS request may also include an address of a client-facing server for the server corresponding to the name, and cryptographic and/or other ECH configuration information, as described in further detail hereinafter. As indicated in FIG. 1, the client device 102 and the DNS recursive resolver 112 may be associated with an enterprise 103. The client-facing server 104 (e.g., and/or one or more other client-facing servers) and the DNS authoritative resolver 110 may be servers of an edge network 105 external to the enterprise 103.

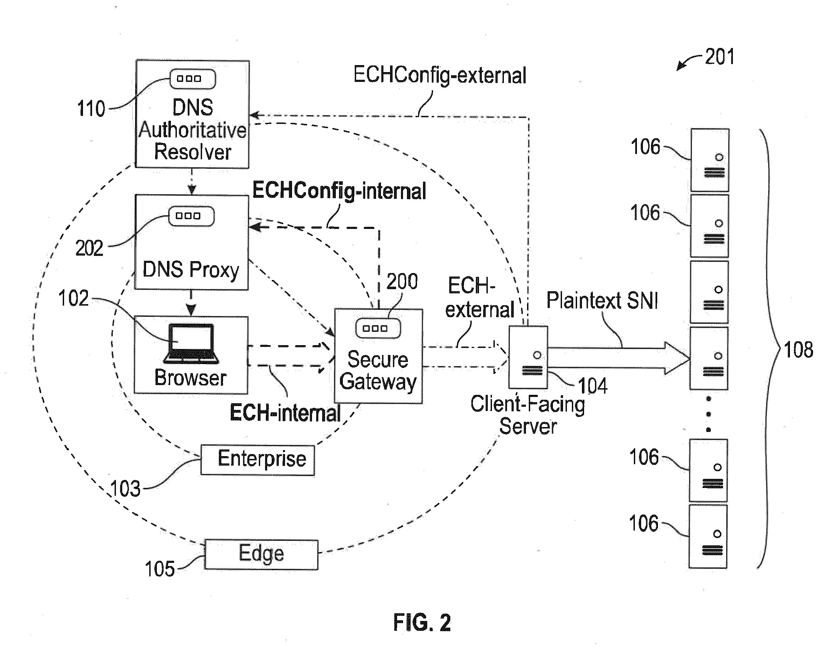

In one or more implementations, devices and/or servers that are associated with an enterprise may include installed enterprise software and/or hardware that is accessible and/or controllable by the enterprise (e.g., by an authorized administrator of the enterprise). A client device (e.g., the client device 102) that is associated with an enterprise (e.g., the enterprise 103) may have one or more users that are authorized (by the enterprise) to run software and perform other tasks using the client device, and may have one or more administrators, different from the user, that are authorized (by the enterprise) to install, remove, update, and/or otherwise manage software (e.g., including enterprise software) on the client device. The one or more administrators and/or enterprise software or firmware on the client device (e.g., enterprise software configured to perform operations as described herein in connection with any or all of FIGS. 2-7), may be authorized by the user (e.g., via an employment contract or other agreement from the user) to inspect network traffic involving the client device.

As illustrated in FIG. 1, the client-facing server 104 can provide ECH configuration (ECHConfig) information to the DNS authoritative resolver 110, which can be obtained by the DNS recursive resolver 112 and provided to the client device 102 in response to a DNS request from the client device 102. For example, the ECHconfig information may include a name (e.g., a hostname) of a client-facing server 104 for the origin content server 106 to which the client device 102 is attempting to connect, and a cryptographic key (e.g., a public key of the client-facing server 104) or information from which the cryptographic key can be derived. The client device 102 may then generate a ClientHello message, in part, by encrypting the SNI (e.g., and/or other information in the ClientHello message) for the intended content origin server using the cryptographic key received in (or derived from) the ECHconfig information. As illustrated by FIG. 1, the client-facing server 104 may then decrypt the SNI in the ECH (e.g., using a private key corresponding to the public key previously provided to the DNS authoritative resolver 110 and used by the client device 102 to encrypt the SNI), and facilitate a connection to the desired origin content server 106 using the plaintext SNI of that origin content server.

To generate the ECH, the client device 102 may obtain a ECHConfig for the origin content server 106, through a DNS request for the HTTPS Resource Records (HTTPS-RR) of the origin content server 106. For further privacy and security, the DNS request may be sent using DNS-over-HTTPS (DoH). The HTTPS-RR may include configuration parameters (ECHConfig) for the TLS connection, including a cryptographic key or information from which the cryptographic key can be derived. The client device 102 may encrypt the ClientHello using the cryptographic key received in or derived from information in the ECHConfig, and then encode this encrypted "inner" ClientHello (CHi) in an ECH extension of an "outer" ClientHello (CHo). The client device 102 may then connect and TLS handshake with the,client-facing server 104, by sending ECH (e.g., the "outer" ClientHello with the CHi extension) to the client-facing server 104. A ServerHello response from the client-facing server 104 may indicate whether ECH was accepted by encoding a special value in the ServerHello random field. If ECH was accepted, then the client device 102 may continue the TLS handshake using the "inner" ClientHello, otherwise using the "outer" ClientHello.

In one or more implementations, if the client device 102 does not have a ECHConfig for the origin content server, the client device can send a "fake" ECH extension called a Generate Random Extensions and Sustain Extensibility (GREASE) ECH, which is indistinguishable from an actual ECH extension.

The ability to distinguish between GREASE ECH and actual ECH may be technically advantageous for ECH intercept (e.g., by giving interception proxy the ability to extract the actual destination from the "outer" ClientHello while ignoring the fake "inner" ClientHello). In one or more implementations of the subject technology, a device (e.g., a DNS proxy and/or TLS proxy) may store and/or track all TLS sessions to map ECHConfig values to a client-facing server. The GREASE ECH extensions are random, while actual ECHConfig values are static for periods of time (e.g., hours). One or more TLS proxy instances in a system may cooperate to decode ECHConfig from observed TLS sessions and build a distributed mapping of likely actual ECHConfig values based on the observation frequency. The mapping may reveal the actual origin content server, or may not but may help distinguish a GREASE ECH from actual ECH, in one or more implementations.

FIG. 2 is a diagram illustrating an example deployment of the encrypted ClientHello (ECH) in which TLS intercept of the ECH can be performed, in accordance with one or more implementations of the subject technology. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

In the example network architecture 201 of FIG. 2, as in FIG. 1, a client device 102 establishes, using a handshake operation including an ECH, a TLS connection with an origin content server 106 that is one of an anonymity set 108 of origin content servers 106, via a client-facing server 104 for the anonymity set 108.

However, in the network architecture 201 of FIG. 2, a server 200 (e.g., a secure gateway of the enterprise 103) may intercept an internal (e.g., internal to the enterprise) ClientHello message including an internal ECH extension (ECH-internal) sent from the client device 102, and decrypt the internal ECH extension to obtain the plaintext SNI of the desired origin content server 106. The server 200 may determine whether to allow or deny the requested TLS connection by comparing the SNI to a TLS intercept policy. If the TLS connection is allowed, the server 200 may re-encrypt the ClientHello using a different cryptographic key from the cryptographic key that was used by the client device 102 to encrypt the ECH-internal.

In order to, for example, allow the server 200 to decrypt the ECH-internal from the client device 102, the client device 102 may encrypt the ECH using a cryptographic key that is known to (e.g., generated and/or stored by) the server 200 and/or for which a decryption key (e.g., a private key) is known to (e.g., generated and/or stored by) the server 200. For example, the client device 102 may encrypt a ClientHello using a cryptographic key that corresponds to a private cryptographic key that is stored at the server 200. As shown in FIG. 2, in one or more implementations, the server 200 may provide (e.g., in internal ECHConfig information, referred to in FIG. 2 as ECHConfig-internal) the cryptographic key (or information from which the cryptographic key can be derived) to a server 202 (e.g., a DNS proxy), to be provided to the client device 102 (e.g., in response to a DNS request from the client device.

In one or more implementations, when the client device initiates a connection to a origin content server 106 having a name (e.g., a hostname), the client device may send a DNS request to the server 202. The server 202 may obtain an IP address (e.g., of the client-facing server 104) and a cryptographic key for the client-facing server 104 (e.g., a cryptographic key that was previously provided by the client-facing server 104 to the DNS authoritative resolver 110). For example, the cryptographic key obtained by the server 202 may be a public key corresponding to a private key stored at the client-facing server 104. The server 202 may obtain the IP address and the cryptographic key (or information from which the key can be derived) from a cache at the server 202 or by forwarding the DNS request to the DNS authoritative resolver 110.

The server 202 (e.g., the DNS proxy) may then replace the cryptographic key for the client-facing server 104 with the cryptographic key for the server 200 (e.g., the TLS proxy), and return the cryptographic key for the server 200 (e.g., and the IP address for the client-facing server 104) to the client device 102 in a DNS response. In this way, when the client device 102 encrypts the ClientHello using the cryptographic key received in the DNS response, the ECH-internal that is intercepted by the server 200 can be decrypted and inspected by the server 200.

As indicated in FIG. 2, the server 202 may also provide the cryptographic key for the client-facing server 104 (e.g., that was received from the DNS authoritative resolver 110) to the server 200 (e.g., the TLS proxy). In this way, if the server 200 determines that the connection to the origin content server 106 is allowed, the server 200 can re-encrypt the ClientHello using the cryptographic key for the client-facing server 104, and provide the re-encrypted (e.g., external to the enterprise) ClientHello (e.g., ECH-external) to the client-facing server 104. The TLS ECH operations upstream of the server 200 can then proceed unaffected by the operations of the client device 102, the server 200, and the server 202 using of ECH-internal. As indicated in FIG. 2, the client device 102, the server 200 (e.g., the TLS proxy), and the server 202 (e.g., the DNS proxy) can be associated with the enterprise 103. The client-facing server 104, the DNS authoritative resolver 110, and/or the origin content servers 106 may be unassociated with the enterprise 103.

In the example of FIG. 2, a single client device 102, a single server 200, a single server 202, a single DNS authoritative resolver 110, a single client-facing server 104, and seven origin content servers 106 in a single anonymity set 108 are shown. However, this is merely illustrative and, in various implementations, more than one client device 102, server 200, server 202, DNS authoritative resolver 110, client-facing server 104, and/or anonymity set 108 may be used, and/or any number of origin content servers 106 may be included in an anonymity set 108.

In the example of FIG. 2, the server 202 may implement a DNS proxy and the server 200 may implement a TLS proxy. In one or more other implementations, the DNS proxy and the TLS proxy may be implemented at the same device or server.

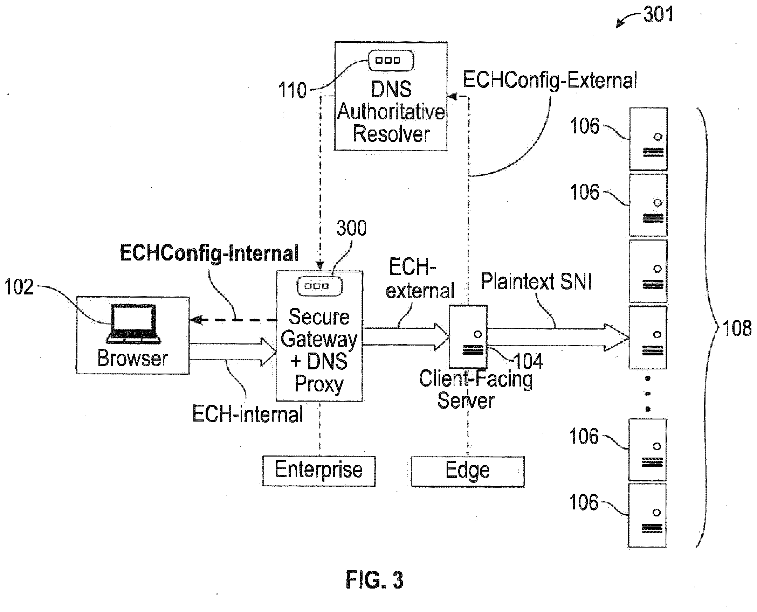

For example, FIG. 3 illustrates an example network architecture 301 in which a server 300 (e.g., a secure gateway) incorporates a DNS proxy that can return a first cryptographic key for the TLS proxy at the server 300 to the client device 102 in a DNS response to a DNS request from the client device 102. In this example, the server 300 can decrypt an ECH-internal received from the client device 102, determine whether to allow or deny the requested connection, and, if allowed, re-encrypt the ClientHello with the cryptographic key for the client-facing server 104 to send the ECH-external to the client-facing server 104. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

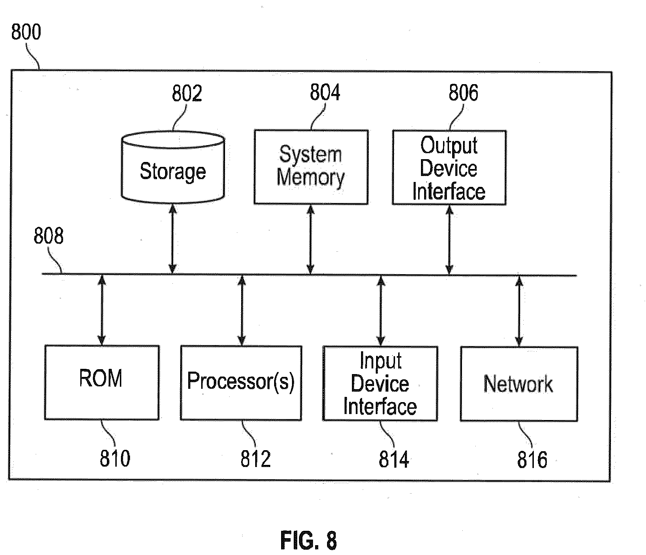

In the examples of FIGS. 1, 2, and 3, the client device 102 is depicted as a laptop computer and the server 200, the server 202, the DNS authoritative resolver 110, the client-facing server 104, and the origin content servers 106 are depicted as being implemented as servers. However, in various implementations, any or all of the client device 102, the server 200, the server 202, the DNS authoritative resolver 110, the client-facing server 104, and origin content servers 106 may be implemented in any type of computing device capable of performing the operations described herein. In one or more implementations, any or all of the client device 102, the server 200, the server 202, the DNS authoritative resolver 110, the client-facing server 104, and the origin content servers 106 may be, and/or may include all or part of, the electronic system discussed below with respect to FIG. 8.

In one or more implementations, the DNS proxy at server 200 of FIG. 2, the TLS proxy at server 202, and/or the server 300 of FIG. 3 may store ECHConfig-external values for the purpose of building a mapping from ECHConfig values to origin content server hostnames. This mapping may be used to analyze ECH anonymity sets 108 (e.g., to determine which client-facing server maps to which origin content servers) in one or more implementations.

In general, in the examples of FIGS. 2 or 3, TLS Proxy instances may generate internal (to an enterprise) ECHConfig values and distribute those values to DNS Proxy instances. In one or more implementations, the DNS Proxy instances may intercept all DNS requests in the enterprise, replacing ECHConfig external values with corresponding ECHConfig internal values. TLS sessions can be intercepted and then updated so that upstream TLS sessions can use the external ECHConfig values as expected at the upstream devices/servers. TLS clients (e.g., browsers) may use the internal ECHConfig values, enabling the TLS Proxy instances to decrypt the ECH extensions. The use of the ECH extension is preserved on upstream TLS sessions.

The DNS Proxy instances may optionally record all ECHConfig external values and distribute those values to all TLS Proxy instances. Recording ECHConfig external values may also include building a mapping from ECHConfig values to origin hostnames, which may be used to analyze ECH anonymity sets. In one or more implementations, a TLS Proxy instance (e.g., at server 200 or server 300) may distinguish between actual ECH and GREASE ECH values using a stored list of internal ECHConfig values, given that the TLS clients would select one of those internal ECHConfig values for actual ECH. For example, an actual ECH may be distinguished from a grease ECH (e.g., by a TLS proxy) based on a list of internal (internal) ECH Config values used in the enterprise, as TLS clients of the enterprise will use known ECHConfig-internal for real ECH.

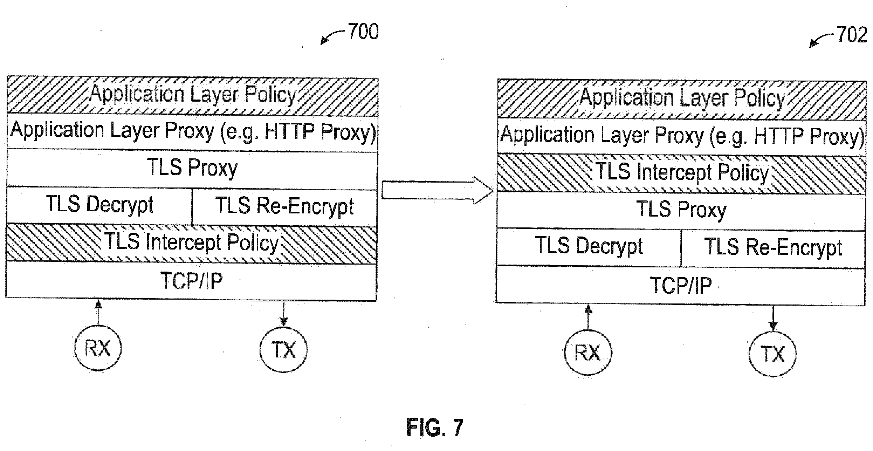

In the examples of FIGS. 2 and 3, selective intercept can still be provided, even when ECH is used. For example, the impact of ECH intercept on application layer proxies is discussed in further detail hereinafter (e.g., in connection with FIG. 7), which provides a mechanism that can replace a selective intercept by tunnelling the original downstream TLS session after a policy checkpoint with selective intercept involving the application layer.

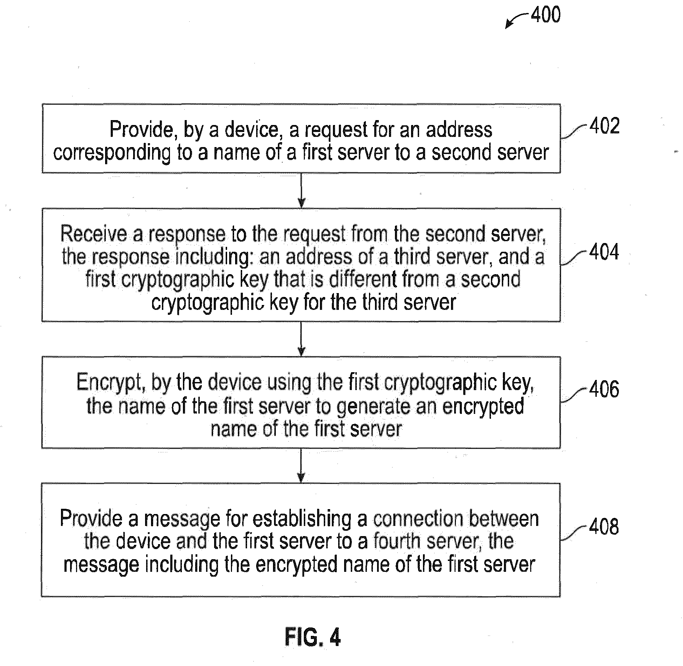

FIG. 4 is a flowchart illustrating an example process 400 that may be performed by a device, such as a client device, for establishing a TLS connection using an encrypted ClientHello (ECH) message according to aspects of the subject technology. For explanatory purposes, the blocks of the process illustrated in FIG. 4 are described herein as occurring in serial, or linearly. However, multiple blocks of the process may occur in parallel. In addition, the blocks of the process need not be performed in the order shown and/or one or more blocks of the process need not be performed and/or can be replaced by other operations.

In the example of FIG. 4, at block 402, a device (e.g., a client device, such as client device 102 of FIG. 2 or FIG. 3) may provide a request (e.g., domain name system (DNS) request) for an address corresponding to a name of a first server (e.g., one of the origin content servers 106) to a second server (e.g., server 202 of FIG. 2 or server 300 of FIG. 3). The request may include a name (e.g., a hostname) of the first server to which the device is attempting to establish a connection, such as a TLS connection.

At block 404, the device may receive (e.g., in response to the request) a response (e.g., a DNS response) from the second server, the response including: an address (e.g., an IP address) of a third server (e.g., client-facing server 104) different from the first server and through which one or more devices communicate with the first server, and a first cryptographic key that is different from a second cryptographic key for the third server (e.g., client-facing server 104). For example, the second server may have replaced the second cryptographic key in the DNS response with the first cryptographic key. For example, the first cryptographic key may be known by (e.g., generated by) a TLS proxy associated with the same enterprise as the device and the second server in one or more implementations.

At block 406, the device may encrypt, using the first cryptographic key, at least the name (e.g., a hostname in a SNI of a ClientHello extension) of the first server (e.g., one of the origin content servers 106) to generate an encrypted name of the first server. The encrypted name of the first server may be included in an encrypted ClientHello (ECH) extension that includes additional encrypted information. As examples, the additional encrypted information in the ECH extension may include a TLS version, one or more cipher suite indicators, and/or any other (e.g., all) elements of an Application-Layer Protocol Negotiation (ALPN) list for the ClientHello.

At block 408, the device may provide a message (e.g., a ClientHello handshake message including an encrypted ClientHello (ECH), such as the ECH-internal extension of FIG. 2 or FIG. 3) for establishing a connection (e.g., transport layer security (TLS) connection) between the device and the first server to a fourth server (e.g., server 200 of FIG. 2 or server 300 of FIG. 3), the message including the encrypted name of the first server (e.g., in an encrypted extension, such as an encrypted ClientHello-inner (CHi)). In one or more implementations, the second server may be a DNS proxy, the third server may be a client-facing server (e.g., client-facing server 104) for a set of servers (e.g., the anonymity set 108) including the first server, and the fourth server may be a TLS proxy. In one or more implementations, the device, the DNS proxy, and the TLS proxy are associated with a common enterprise (e.g., enterprise 103 of FIG. 2 or FIG. 3). In one or more implementations, the message may also include an unencrypted portion (e.g., a ClientHello outer). In one or more implementations, the ECH may be an extension to the encrypted portion.

In one or more implementations, the TLS proxy is configured to allow or deny the establishing of the connection based, in part, on a decryption of the encrypted name of the first server and a policy of the enterprise. For example, the TLS proxy may allow or deny the establishing of the TLS connection and/or to determine whether to feed an Application Layer Proxy based, in part, on a decryption of the encrypted name of the first server and a TLS intercept policy of the enterprise (e.g., as discussed in further detail herein in connection with FIGS. 2, 3, and 6). In one or more implementations, the TLS proxy is configured to allow or deny the establishing of the TLS connection and/or to determine whether to feed an Application Layer Proxy based, in part, on decryption(s) of one or more other fields (e.g., the ALPN list) of the ECH extension. For example, TLS proxy may allow or deny the establishing of the connection based, in part, on a decryption of the encrypted name of the first server and a policy of the enterprise by allowing and completing a handshake using the message if the encrypted name of the first server is on an allow list in the policy, or denying the handshake if the encrypted name of the first server is on a block list in the policy or is an untrusted or unverified or unknown server.

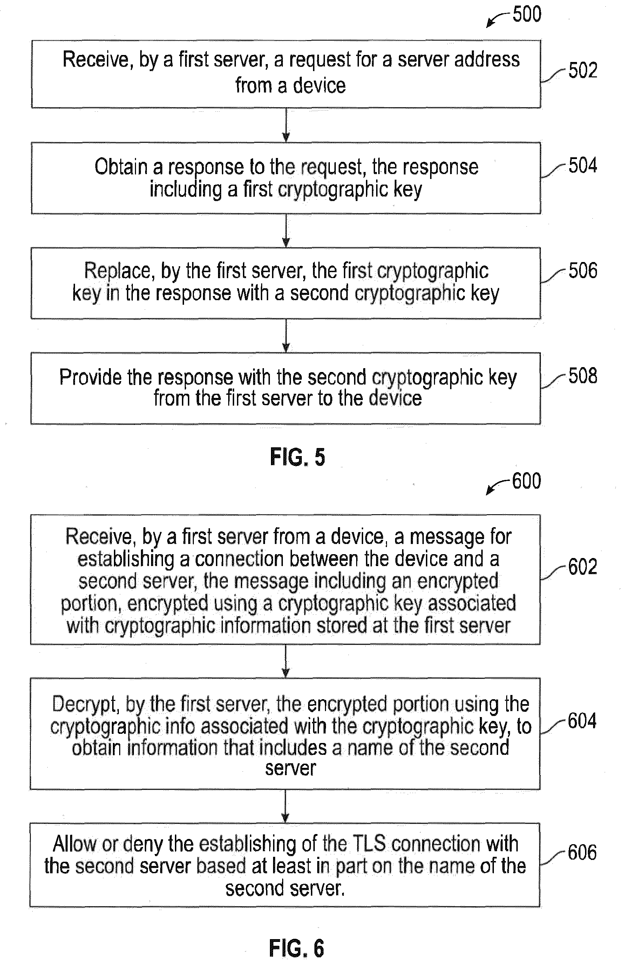

FIG. 5 is a flowchart illustrating an example process 500 that may be performed by a DNS proxy according to aspects of the subject technology. For explanatory purposes, the blocks of the process illustrated in FIG. 5 are described herein as occurring in serial, or linearly. However, multiple blocks of the process may occur in parallel. In addition, the blocks of the process need not be performed in the order shown and/or one or more blocks of the process need not be performed and/or can be replaced by other operations.

In the example of FIG. 5, at block 502, a first server (e.g., the server 202 of FIG. 2 or the server 300 of FIG. 3) may receive a request (e.g., DNS request) for a server address (e.g., an address of an origin content server 106) from a device (e.g., a client device, such as the client device 102). For example, the first server may be or implement a DNS proxy.

At block 504, the first server may obtain (e.g., in response to receiving the request) a response (e.g., a DNS response) to the request, the response including a first cryptographic key. For example, obtaining the response may include forwarding the request to a second server (e.g., a DNS server, such as the DNS authoritative resolver 110), and receiving the response including the first cryptographic key from the second server. For example, the first cryptographic key may have been provided to the second server by a client-facing server for an anonymity set of origin content servers in one or more implementations. As another example, obtaining the response may include obtaining information (e.g., DNS information such as a server address of a different server, such as the server address of the client-facing server 104) from a cache at the first server and generating the response without forwarding the request to the second server. In one or more implementations, device and the first server are associated with an enterprise (e.g., enterprise 103), and the second server is unassociated with the enterprise.

At block 506, the first server may replace the first cryptographic key in the response with a second cryptographic key. In one or more implementations, the first cryptographic key may be a public key of a third server (e.g., the client-facing server 104). In one or more implementations, the second cryptographic key may be a public key of a fourth server (e.g., a TLS proxy, such as a TLS proxy at the server 200 of FIG. 2 or the server 300 of FIG. 3). For example, the fourth server may be associated with the enterprise and the third server may be unassociated with the enterprise. For example, the third server may be a client-facing server for a set of servers (e.g., the anonymity set 108) that includes a fifth server (e.g., an origin content server 106) at the server address and having a name (e.g., a hostname) that is included in the request.

At block 508, the first server may provide the response with the second cryptographic key to the device. In one or more implementations, the first server may receive the second cryptographic key from a third server (e.g., the server 200 of FIG. 2 or the server 300 of FIG. 3) implementing a TLS proxy (e.g., for the enterprise). In this way, the first server may provide the device with a cryptographic key that can be used to generate an ECH-internal to be provided to a secure gateway (e.g., including the TLS proxy) for decoding by the secure gateway, inspection by the secure gateway, and re-encryption using the first cryptographic key by the secure gateway.

In one or more implementations, the process 500 may also include storing the first cryptographic key at the first server in association with the name. For example, storing the first cryptographic key at the first server in association with the name may include storing the first cryptographic key, storing the name, and storing an indicator that maps the first cryptographic key to the name. In one or more implementations, the process 500 may also include providing the first cryptographic key to one or more other servers, such as to a TLS proxy (e.g., in implementations in which the DNS proxy and the TLS proxy are implemented as separate systems). For example, the first server and/or one or more other servers may (e.g., separately and/or in cooperation) store the first cryptographic key, the name, and/or other ECHConfig information and build a mapping from ECHConfig values to origin hostnames. This mapping at the first server and/or one or more other servers may be used to determine which client-facing server maps to which origin content servers and/or to distinguish an actual ECH from a GREASE ECH in one or more implementations.

FIG. 6 is a flowchart illustrating an example process 600 that may be performed by a TLS proxy according to aspects of the subject technology. For explanatory purposes, the blocks of the process illustrated in FIG. 6 are described herein as occurring in serial, or linearly. However, multiple blocks of the process may occur in parallel. In addition, the blocks of the process need not be performed in the order shown and/or one or more blocks of the process need not be performed and/or can be replaced by other operations.

In the example of FIG. 6, at block 602, a first server (e.g., the server 200 of FIG. 2 or the server 300 of FIG. 3) may receive, from a device (e.g., a client device such as client device 102), a message (e.g., a ClientHello message) for establishing a connection (e.g., a TLS connection) between the device and a second server (e.g., an origin content server 106). The message may include an encrypted portion (e.g., an extension, such as an ECH extension, which may be implemented as an ECH-internal as described herein), encrypted using a cryptographic key associated with a cryptographic information (e.g., a private cryptographic key) stored at the first server. For example, the cryptographic key may have previously been provided from the first server to a DNS proxy, and from the DNS proxy to the device.

At block 604, the first server may decrypt the encrypted portion using the cryptographic information associated with the cryptographic key, to obtain information that includes a name (e.g., a hostname in an SNI field of the extension) of the second server. In one or more implementations, the process 600 may also include, prior to receiving the message from the device, generating the cryptographic key at the first server; and providing the cryptographic key to a fourth server (e.g., a DNS proxy, such as the server 202 of FIG. 3 or the server 300 of FIG. 3). In one or more implementations, the fourth server may include a DNS proxy; and the device, the TLS proxy, and the DNS proxy may be associated with an enterprise (e.g., the enterprise 103); and the anonymity set of servers and the client-facing server may be unassociated with the enterprise.

At block 606, the first server may allow or deny the establishing of the TLS connection with the second server based at least in part on the name of the second server. For example, the first server may allow or deny the establishing of the TLS connection with the second server based on a comparison of some or all of the name of the second server with an intercept policy (e.g., a TLS intercept policy, which may include a list of allowed servers to which connections are allowed by the intercept policy and/or a list of blocked servers to which connections are disallowed by the intercept policy). For example, the first server may allow and complete a handshake using the message if the name of the second server is on an allow list in the intercept policy, or deny the handshake if the name of the server is on a block list in the intercept policy or is an untrusted or unverified or unknown server.

In one or more use cases, allowing the establishing of the connection may include allowing and completing the handshake operation based (at least in part) on the name of the second server, and decrypting and immediately re-encrypting the request without performing any further security scanning of the content. In one or more other use cases, allowing the establishing of the connection may include allowing and completing the handshake operation based (at least in part) on the name of the second server, and then decrypting and performing additional security checks on the content (e.g., application layer payload content), and determining whether to deny the request after completing the TLS handshake based on the results of those additional security checks. These additional security checks may be performed on the request, the response, or both.

In one or more implementations, the process 600 may also include re-encrypting, by the first server, the information including the name of the second server using another cryptographic key different from the cryptographic key, to generate re-encrypted information (e.g., a re-encrypted extension); forwarding the message with the re-encrypted information to a third server (e.g., a client-facing server such as the client-facing server 104); and determining, by the first server and based on an intercept policy (e.g., a TLS Intercept Policy), whether to allow a security check in an application layer proxy to be performed (e.g., as discussed in further detail hereinafter in connection with FIG. 7). For example, the other cryptographic key may have been previously provided from a client-facing server for the second server to a DNS server (e.g., the DNS authoritative resolver 110), provided from the DNS server to a DNS proxy, and provided from the DNS proxy to the first server. In one or more implementations, the first server may include a transport layer security (TLS) proxy, and the second server include a server (e.g., an origin content server) of an anonymity set (e.g., the anonymity set 108) of servers having a client-facing server (e.g., the client-facing server 104) implemented by the third server.

In one or more implementations, the ECH intercept operations of, for example, FIGS. 2, 3, 4, 5, and/or 6, may impact application layer proxies. FIG. 7 is a diagram illustrating a change to a model in the TLS intercept policy that can be implemented to accommodate the ECH intercept operations described herein according to aspects of the subject technology. In the example of FIG. 7, a model 700 in which TLS intercept is used without ECH is modified to an updated model 702. In one or more implementations, the updated model 702 can be used to perform selective intercept along with the ECH TLS intercept operations described in connection with FIGS. 2-6. In the model 700, which is commonly used without ECH, selective intercept is provided without having to engage the TLS proxy (i.e., avoid TLS decrypt), thus providing a cryptographic guarantee to the users of the device that their application layer content is not inspected. In the updated model 702, the Application Layer Policy may only be used for TLS traffic if allowed by the TLS Intercept Policy, retaining the intent of using selective intercept (e.g., to avoid access to sensitive application layer payload data for certain data categories).

As shown in FIG. 7, in model 700, the TLS Intercept Policy is used to decide whether the TLS Proxy should be used, and the TLS Proxy feeds the Application Layer Proxy by default. In contrast, in the updated model 702, the TLS Proxy intercepts all TLS sessions that use ECH (e.g., as described herein in connection with, for example, FIGS. 2-6), and the TLS Intercept Policy is used to decide whether the TLS proxy feeds the Application Layer Proxy. If it is determined (e.g., according to the TLS Intercept Policy) that the TLS proxy should not feed the Application Layer Proxy then the TLS Proxy stays engaged, acting as a relay on the TLS layer, and the traffic from TLS connection is not fed to the application-layer proxy. Traffic from the TLS connection may not be fed to the application-layer proxy for, for example, specified hostnames. In this way, the TLS proxy can determine, based on the TLS Intercept Policy, whether to allow one or more security checks in the Application Layer Proxy to be performed. For example, determining whether to allow a security check in an application layer proxy to be performed may include determining whether to provide application layer payload data to the application layer proxy according to one or more rules and/or conditions in the TLS intercept Policy for providing application layer payload data to the application layer proxy. A security check in an application layer proxy may include determining whether the content of the application layer payload data is consistent with or violates one or more rules and/or conditions in the Application Layer Policy.

FIG. 8 illustrates an electronic system 800 with which one or more implementations of the subject technology may be implemented. The electronic system 800 may include various types of computer readable media and interfaces for various other types of computer readable media. The electronic system 800 includes a bus 808, one or more processing unit(s) 812, a system memory 804 (and/or buffer), a ROM 810, a permanent storage device 802, an input device interface 814, an output device interface 806, and one or more network interfaces 816, or subsets and variations thereof.

The bus 808 collectively represents all system, peripheral, and chipset buses that communicatively connect the numerous internal devices of the electronic system 800. In one or more implementations, the bus 808 communicatively connects the one or more processing unit(s) 812 with the ROM 810, the system memory 804, and the permanent storage device 802. From these various memory units, the one or more processing unit(s) 812 retrieves instructions to execute and data to process in order to execute the processes of the subject disclosure. The one or more processing unit(s) 812 can be a single processor or a multi-core processor in different implementations.

The ROM 810 stores static data and instructions that are needed by the one or more processing unit(s) 812 and other modules of the electronic system 800. The permanent storage device 802, on the other hand, may be a read-and-write memory device. The permanent storage device 802 may be a non-volatile memory unit that stores instructions and data even when the electronic system 800 is off. In one or more implementations, a mass-storage device (such as a magnetic or optical disk and its corresponding disk drive) may be used as the permanent storage device 802.

In one or more implementations, a removable storage device (such as a floppy disk, flash drive, and its corresponding disk drive) may be used as the permanent storage device 802. Like the permanent storage device 802, the system memory 804 may be a read-and-write memory device. However, unlike the permanent storage device 802, the system memory 804 may be a volatile read-and-write memory, such as random access memory. The system memory 804 may store any of the instructions and data that one or more processing unit(s) 812 may need at runtime. In one or more implementations, the processes of the subject disclosure are stored in the system memory 804, the permanent storage device 802, and/or the ROM 810. From these various memory units, the one or more processing unit(s) 812 retrieves instructions to execute and data to process in order to execute the processes of one or more implementations.

The bus 808 also connects to the input and output device interfaces 814 and 806. The input device interface 814 enables a user to communicate information and select commands to the electronic system 800. Input devices that may be used with the input device interface 814 may include, for example, alphanumeric keyboards and pointing devices (also called "cursor control devices"). The output device interface 806 may enable, for example, the display of images generated by electronic system 800. Output devices that may be used with the output device interface 806 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 8, the bus 808 also couples the electronic system 800 to one or more networks and/or to one or more network nodes through the one or more network interface(s) 816. In this manner, the electronic system 800 can be a part of a network of computers (such as a LAN, a wide area network ("WAN"), or an Intranet, or a network of networks, such as the Internet. Any or all components of the electronic system 800 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f) unless the element is expressly recited using the phrase "means for" or, in the case of a method claim, the element is recited using the phrase "step for".

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A non-transitory computer-readable medium storing instructions which, when executed by one or more processors, cause the one or more processors to perform operations comprising:
providing, by a device, a request for an address corresponding to a name of a first server to a second server;
receiving a response to the request from the second server, the response including: an address of a third server different from the first server and through which one or more devices communicate with the first server, and a first cryptographic key that is different from a second cryptographic key for the third server;
encrypting, by the device using the first cryptographic key, the name of the first server to generate an encrypted name of the first server; and
providing a message for establishing a connection between the device and the first server to a fourth server, the message including the encrypted name of the first server.

2. The non-transitory computer-readable medium of claim 1, wherein the second server comprises a DNS proxy, wherein the third server comprises a client-facing server for a set of servers including the first server, and wherein the fourth server comprises a transport layer security (TLS) proxy.

3. The non-transitory computer-readable medium of claim 2, wherein the device, the DNS proxy, and the TLS proxy are associated with a common enterprise.

4. The non-transitory computer-readable medium of claim 3, wherein the TLS proxy is configured to allow or deny the establishing of the connection based, in part, on a decryption of the encrypted name of the first server and a policy of the enterprise.

5. The non-transitory computer-readable medium of claim 4, wherein the message comprises an encrypted ClientHello (ECH) that includes the encrypted name of the first server.

6. The non-transitory computer-readable medium of claim 5, wherein the message further comprises an unencrypted portion.

7. A non-transitory computer-readable medium storing instructions which, when executed by one or more processors, cause the one or more processors to perform operations comprising:
receiving, by a first server, a request for a server address from a device;
obtaining, a response to the request, the response including a first cryptographic key;
replacing, by the first server, the first cryptographic key in the response with a second cryptographic key; and
providing the response with the second cryptographic key from the first server to the device.

8. The non-transitory computer-readable medium of claim 7, wherein the first server comprises a DNS proxy.

9. The non-transitory computer-readable medium of claim 8, wherein obtaining the response comprises:
forwarding the request to a second server; and
receiving the response including the first cryptographic key from the second server.

10. The non-transitory computer-readable medium of claim 9, wherein the device and the first server are associated with an enterprise, and wherein the second server is unassociated with the enterprise.

11. The non-transitory computer-readable medium of claim 10, wherein the first cryptographic key comprises a public key of a third server.

12. The non-transitory computer-readable medium of claim 11, wherein the second cryptographic key comprises a public key of a fourth server.

13. The non-transitory computer-readable medium of claim 12, wherein the fourth server is associated with the enterprise and the third server is unassociated with the enterprise.

14. The non-transitory computer-readable medium of claim 13, wherein the third server is a client-facing server for a set of servers that include a fifth server at the server address and having a name that is included in the request.

15. A non-transitory computer-readable medium storing instructions which, when executed by one or more processors, cause the one or more processors to perform operations comprising:
receiving, by a first server from a device, a message for establishing a connection between the device and a second server, wherein the message comprises an encrypted portion, encrypted using a cryptographic key associated with cryptographic information stored at the first server;
decrypting, by the first server, the encrypted portion using the cryptographic information associated with the cryptographic key, to obtain information that includes a name of the second server; and
allowing or denying the establishing of the connection between the device and the second server based at least in part on the name of the second server.
